# EUROPÄISCHE PATENTSCHRIFT

(11) **EP 1 188 039 B1**
(45) Veröffentlichungstag und Bekanntmachung des Hinweises auf die Patenterteilung: **16.08.2006**
(21) Anmeldenummer: 00931149.9
(22) Anmeldetag: 09.05.2000
(51) Int. Cl.: G01M 17/007

(54) **VERFAHREN ZUR DURCHFÜHRUNG VON CRASH-SCHLITTEN-VERSUCHEN UND VORRICHTUNG HIERFÜR**
METHOD FOR CONDUCTING CRASH TESTS USING A CARRIAGE AND CORRESPONDING DEVICE
PROCEDE POUR REALISER DES ESSAIS DE CHOC AU MOYEN D'UN CHARIOT, ET DISPOSITIF POUR METTRE EN OEUVRE LEDIT PROCEDE

(30) Priorität: 18.06.1999 DE 19927944
(43) Veröffentlichungstag der Anmeldung: 20.03.2002
(73) Patentinhaber: DSD Dr. Steffan Datentechnik Ges. M.b.H., 4020 Linz (AT)
(72) Erfinder: STEFFAN, Hermann, A-4020 Linz (AT); MOSER, Andreas, A-4020 Linz (AT); HOFINGER, Manfred, A-4020 Linz (AT); GEIGL, Bertram, Christian, A-5330 Mattighofen (AT); MAYRHOFER, Erich, A-4020 Linz (AT); HOSCHOPF, Heinz, A-8380 Jennersdorf (AT); WINKLER, Stefan, A-8010 Graz (AT); STEINER, Kurt, A-8020 Graz (AT)
(74) Vertreter: Manitz, Finsterwald & Partner GbR
(86) Internationale Anmeldenummer: PCT/EP2000/004139
(87) Internationale Veröffentlichungsnummer: WO 2000/079236

(56) Entgegenhaltungen:
- DE-A- 2 143 540
- DE-A- 4 330 122
- DE-C- 3 421 546
- FR-A- 2 765 685

## Beschreibung

Die vorliegende Erfindung betrifft ein Verfahren zur Durchführung von Crash-Schlitten-Versuchen, insbesondere zur Simulierung des Aufpralls eines Kraftfahrzeugs auf ein Hindernis, bei welchem die Verzögerungskräfte eines realen Aufpralls simuliert werden, indem ein Crash-Schlitten entsprechend der realen Verzögerungskurve beschleunigt wird. Darüber hinaus betrifft die Erfindung eine Vorrichtung zur Durchführung eines solchen Verfahrens.

Wenn ein Fahrzeug bei einem Unfall gegen einen Widerstand, beispielsweise ein anderes Fahrzeug prallt, so wird es der Verformbarkeit des Fahrzeuges und des Widerstands entsprechend verzögert. Diese Verzögerung initiiert eine Beschleunigung auf die beweglichen Massen des Fahrzeuges. Um diese Beschleunigungen untersuchen zu können, ist es bekannt, reale Crash-Versuche durchzuführen, bei welchen ein Fahrzeug auf eine gewünschte Geschwindigkeit beschleunigt wird und auf ein Hindernis prallt (siehe z.B. DE-A-21 43 540). Das Fahrzeug wird hierbei jedoch zerstört und kann nicht für weitere Crash-Versuche verwendet werden.

Um Beschleunigungen bei Unfällen untersuchen zu können, ohne dazu ein gesamtes Fahrzeug vernichten zu müssen, werden sogenannte Crash-Schlittenversuche durchgeführt (siehe z.B. FR-A-2 765 685). Dabei wird ein Schlitten, beispielsweise durch ein vorgespanntes elastisches Seil bis auf die gewünschte Geschwindigkeit beschleunigt. Der Schlitten prallt dann mit dieser Geschwindigkeit auf ein verformbares Hindernis. Bei dieser Art von Versuchen ist es jedoch schwierig, Verzögerungskurven aus realen Crash-Versuchen nachzufahren.

Es ist daher auch bekannt, die Verzögerung eines realen Crash-Versuches durch eine Beschleunigung des Versuchsobjekts zu simulieren. Das heißt, die bei einem Aufprall auf ein Hindernis auf die beweglichen Massen des Fahrzeuges wirkenden Beschleunigungskräfte werden direkt über eine Beschleunigung des Crash-Schlittens auf das Versuchsobjekt ausgeübt. Damit können reale Verzögerungskurven deutlich besser nachgefahren werden.

Zur Durchführung derartiger Versuche wird der Schlitten bei bekannten Verfahren durch eine Schubstange beschleunigt, die entsprechend einer realen Verzögerungskurve hydraulisch aus einem Zylinderrohr ausgefahren wird. Um die reale Verzögerungskurve nachzufahren, wird die hydraulische Beaufschlagung der Schubstange über ein Hydraulikventil gesteuert. Aufgrund der großen erforderlichen Beschleunigung muß dieses eine extrem hohe Durchflußmenge aufweisen und sehr schnell reagieren können. Dabei müssen zur Anpassung an die reale Verzögerungskurve mehrere Kalibrierversuche durchgeführt werden, da ein derartiges Ventil innerhalb der Versuchszeit von maximal 100 Millisekunden nicht geregelt werden kann. Dieses Verfahren ist daher verhältnismäßig aufwendig.

Der Erfindung liegt die Aufgabe zugrunde, ein Verfahren zur Durchführung von Crash-Schlitten-Versuchen anzugeben, mit welchem reale Verzögerungskurven ebenfalls sehr genau nachgefahren werden können, welches aber weniger aufwendig ist. Darüber hinaus soll eine Vorrichtung zur Durchführung eines solchen Verfahrens angegeben werden.

Diese Aufgabe wird dadurch gelöst, daß während des Versuches auf den Crash-Schlitten einerseits eine Kraft in Beschleunigungsrichtung ausgeübt wird, die größer ist als die zur Beschleunigung entsprechend der realen Verzögerungskurve jeweils nötige Kraft, und daß zur Erzielung der gewünschten Beschleunigungskurve auf den Crash-Schlitten oder auf eine diesen antreibende Vorrichtung andererseits eine der Beschleunigungsrichtung entgegengerichtete Bremskraft ausgeübt wird, die so groß ist, daß die resultierende Kraft den Schlitten entsprechend der gewünschten Beschleunigungskurve beschleunigt.

Durch die Ausübung einer Beschleunigungskraft auf den Crash-Schlitten einerseits und einer Bremskraft andererseits können die Beschleunigungserzeugung und die Anpassung der Beschleunigung an eine SollKurve vorteilhafterweise voneinander getrennt werden. Die Anpassung ist dadurch mit relativ geringem Aufwand möglich. Insbesondere kann auch eine Regelung durchgeführt werden. Aufwendige Kalibrierversuche werden dadurch überflüssig, so daß das Verfahren insgesamt deutlich weniger aufwendig ist als das oben beschriebene bekannte Verfahren und dennoch eine sehr genaue Anpassung an die gewünschte Beschleunigungskurve ermöglicht.

Nach einer Ausgestaltung der Erfindung wird die in Beschleunigungsrichtung wirkende Kraft pneumatisch erzeugt. Dies ist in einfacher Weise möglich und erlaubt, ebenfalls in einfacher Weise, eine wiederholte Durchführung von Crash-Schlitten-Versuchen.

Nach einer weiteren Ausgestaltung der Erfindung wird bei maximaler Bremskraft in einem Druckreservoir ein Druck erzeugt, der mindestens der maximal notwendigen Beschleunigungskraft entspricht, und anschließend die Bremse entsprechend der Beschleunigungskurve graduell geöffnet. Auf diese Weise kann die Anpassung der Beschleunigung an die Beschleunigungskurve allein durch gesteuertes oder geregeltes Öffnen der Bremse erreicht werde. Dies ist insbesondere bei Durchführung einer Echtzeitregelung vorteilhaft.

Nach einer weiteren Ausgestaltung der Erfindung wird die Erzeugung des notwendigen Druckes über einen im Druckreservoir angeordneten Drucksensor gesteuert, insbesondere unter Verwendung eines Computers. Dadurch wird die exakte Druckerzeugung im Druckreservoir in geschickter Weise gewährleistet.

Nach einer weiteren Ausgestaltung der Erfindung wird die Bremskraft hydraulisch auf den Bremsschlitten oder eine diesen antreibende Vorrichtung übertragen. Damit ist eine exakte Steuerung und Regelung besonders gut möglich. Aufgrund der verhältnismäßig geringen benötigten Menge an Hydraulikflüssigkeit können Ventile mit verhältnismäßig geringem Durchfluß, insbesondere Standardhydraulikventile, verwendet werden, die auch in Echtzeit geregelt werden können.

Nach einer weiteren Ausgestaltung der Erfindung wird am Ende des Crash-Schlitten-Versuches eine Vollbremsung einer den Crash-Schlitten antreibenden und an diesem lose angreifenden Vorrichtung ausgeführt. Dabei wird das Ende des Crash-Schlitten-Versuches bevorzugt über den zurückgelegten Weg, die Zeit und/oder die Geschwindigkeit des Crash-Schlittens bestimmt. Damit wird die Ausübung einer unkontrollierten Kraft auf den Crash-Schlitten nach beendetem Versuch verhindert.

Eine Vorrichtung zur Durchführung des Verfahrens umfaßt erfindungsgemäß eine Druckkammer, deren Volumen durch einen Kolben begrenzt wird, der über eine Schubstange auf den Crash-Schlitten wirkt, einen Kompressor zur Erzeugung des notwendigen Druckes in der Druckkammer und eine auf den Crash-Schlitten oder die Schubstange wirkende Bremseinrichtung. Damit können erfindungsgemäße Crash-Schlitten-Versuche in vorteilhafter Weise mit pneumatischer Beschleunigung durchgeführt werden.

Nach einer weiteren Ausgestaltung der Erfindung weist die Druckkammer ein Sicherheitsventil zur Begrenzung des Maximaldrucks auf. Eine Beschädigung der Anlage durch einen Überdruck wird dadurch vermieden.

Nach einer weiteren Ausgestaltung der Erfindung ist in der Druckkammer ein Drucksensor vorhanden, dessen Ausgangssignal einer Steuereinheit zur Steuerung der Druckerzeugung übertragen wird. Damit wird die Erzielung des erforderlichen Druckes in der Druckkammer sichergestellt.

Nach einer weiteren Ausgestaltung der Erfindung ist in der Druckkammer ein Druckschalter vorgesehen, dessen Ansprechdruck etwas unterhalb des Sicherheitsventildrucks liegt, und durch den der Kompressor abgeschaltet wird. Bereits vor Erreichen des maximal zulässigen Druckes wird dadurch der Kompressor automatisch abgeschaltet und das Auftreten eines Überdruckes vermieden.

Nach einer weiteren Ausgestaltung der Erfindung ist die auf den Crash-Schlitten oder die Schubstange wirkende Bremseinrichtung hydraulisch betätigbar. Dies ist konstruktiv vorteilhaft und ermöglicht eine Steuerung und insbesondere eine Regelung der Bremskraft. Hierfür ist bevorzugt ein Standard-Hydraulikventil vorgesehen.

Nach einer weiteren Ausgestaltung der Erfindung ist die Bremskraft in Abhängigkeit von der Beschleunigung des Crash-Schlittens regelbar. Dafür ist ein Beschleunigungssensor vorgesehen, der die Beschleunigung des Crash-Schlittens mißt. Eine andere Möglichkeit besteht darin, die Bremskraft in Abhängigkeit vom Soll-Druck der Hydraulikbremse zu regeln.

Nach einer weiteren Ausgestaltung der Erfindung ist der Crash-Schlitten mittels einer lose am Schlitten angreifenden Schubstange verschiebbar. Dabei wirkt die Bremseinrichtung bevorzugt auf die Schubstange. Dies ist konstruktiv vorteilhaft und ermöglicht auch ein Ausrollen-Lassen des Crash-Schlittens nach beendetem Versuch.

Nach einer weiteren Ausgestaltung der Erfindung sind mehrere Einheiten zur Erzeugung der Beschleunigungskraft vorgesehen. Die zur Beschleunigung des Crash-Schlittens erforderliche Kraft kann dadurch einfacher erzeugt werden.

Ein Ausführungsbeispiel der Erfindung ist in der Zeichnung dargestellt und wird nachfolgend beschrieben. Es zeigt, in schematischer Darstellung,

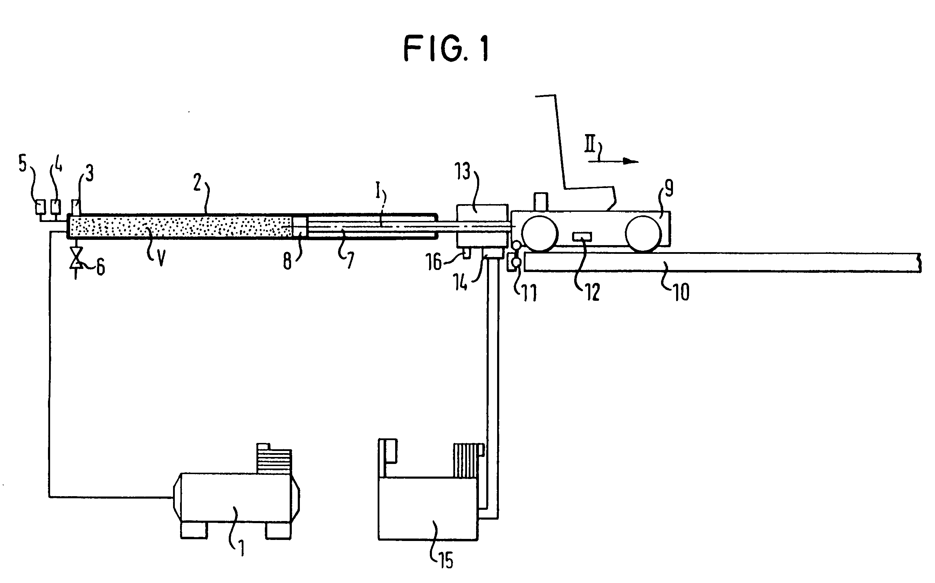

- Figur 1: eine Seitenansicht einer erfindungsgemäßen Crash-Schlittenanlage.

Durch einen Kompressor 1 wird in einem Druckluftrohr 2 ein für die Durchführung eines Crash-Schlitten-Versuches erforderlicher Luftdruck erzeugt. Über ein Sicherheitsventil 3 wird dabei gewährleistet, daß ein Maximaldruck im Druckluftrohr 2 nicht überschritten wird.

An das Druckluftrohr 2 ist ein Drucksensor 4 angeschlossen, welcher den Ist-Druck im Druckluftrohr 2 mißt und an einen hier nicht dargestellten Steuercomputer weitergibt. Bei Erreichen des Soll-Druckes veranlaßt der Steuercomputer die Abschaltung des Kompressors 1. Zusätzlich kann ein Druckschalter 5 an das Druckluftrohr 2 angeschlossen sein, dessen Ansprechdruck etwas unterhalb des Ansprechdruckes des Sicherheitsventils 3 liegt. Bei Ansprechen des Druckschalters 5 wird der Kompressor 1 abgeschaltet. Schließlich ist an dem Druckluftrohr 2 ein Drehschieber 6 vorhanden, durch welchen der Druck im Druckluftrohr 2 auf Umgebungsdruck abgesenkt werden kann.

In das Druckluftrohr 2 ist eine Schubstange 7 eingesetzt, die an ihrem innen liegenden Ende einen Kolben 8 aufweist, der im Druckluftrohr 2 dichtend geführt ist und dadurch das Druckluftvolumen V im Druckluftrohr 2 begrenzt. Das andere Ende der Schubstange 7 greift an einem Crash-Schlitten 9 an, der auf Schienen 10 in Richtung der Längsachse I der Schubstange 7 verschiebbar ist. Die Ausgangsposition des Crash-Schlittens 9 ist durch einen Anschlag 11 bestimmt. Außerdem ist an dem Crash-Schlitten 9 ein Beschleunigungssensor 12 vorgesehen, über den die Beschleunigung des Crash-Schlittens 9 in Richtung des Pfeils II gemessen und an einen hier nicht dargestellten Steuercomputer übertragen werden kann.

An der Schubstange 7 greift eine hydraulisch betätigbare Bremseinrichtung 13 an. Über ein Servoventil 14 wird der Zufluß von Hydraulikflüssigkeit von einem Hydraulikaggregat 15 zur Bremseinrichtung 13 geregelt. Zudem ist an der Bremseinrichtung 13 ein Drucksensor 16 vorhanden, der den Bremsdruck mißt und an die hier nicht dargestellte Steuereinrichtung überträgt.

Zur Durchführung eines Crash-Schlitten-Versuches wird zunächst das Servoventil 14 vollständig geöffnet, so daß die Bremseinrichtung 13 geschlossen ist und die Schubstange 7 in ihrer Ausgangsstellung, in welcher der Crash-Schlitten 9 am Anschlag 11 anliegt, gehalten wird. Nun wird über den Kompressor 1 der nötige Druck im Druckluftrohr 2 aufgebaut. Beim Starten des Versuches beginnt das Servoventil 14 die Bremskraft auf die Schubstange 7 entsprechend einer Soll-Beschleunigungskurve zu regeln. Die Ist-Beschleunigung des Crash-Schlittens 9 wird direkt über den Beschleunigungssensor 12 gemessen und im Steuercomputer zur Regelung der Bremskraft verwendet. Alternativ kann die Bremskraft über den Bremsdrucksensor 16 gemessen und die Bremskraft in Abhängigkeit vom Bremsdruck geregelt werden.

Sobald mindestens eines der Abbruchkriterien, zurückgelegter Weg, Zeit und/oder Geschwindigkeit des Crash-Schlittens 9 erfüllt ist, öffnet das Servoventil 14 wieder vollständig, so daß eine Vollbremsung der Schubstange 7 eingeleitet wird. Der Crash-Schlitten 9 hebt dadurch von der Schubstange 7 ab und rollt auf den Schienen 10 aus. Für den nächsten Versuch werden der Schlitten 9 und die Schubstange 7 in ihre Ausgangsposition zurückgeschoben, in welcher der Schlitten 9 am Anschlag 11 anliegt.

Die Durchführung des Crash-Schlitten-Versuches kann mit dieser Anordnung in besonders geeigneter Weise durchgeführt werden. Dabei kann durch die Trennung von Erzeugung der Beschleunigungskraft und Anpassung der Beschleunigung an eine gewünschte Beschleunigungskurve über die Bremseinrichtung 13 eine sehr genaue Anpassung an eine reale Beschleunigungskurve erzielt werden. Die pneumatische Erzeugung der Beschleunigungskraft sowie die hydraulische Bremseinrichtung sind dabei insbesondere für eine wiederholte Durchführung des Crash-Schlitten-Versuches vorteilhaft.

### Bezugszeichenliste

- 1: Kompressor
- 2: Druckluftrohr
- 3: Sicherheitsventil
- 4: Drucksensor
- 5: Druckschalter
- 6: Drehschieber
- 7: Schubstange
- 8: Kolben
- 9: Crash-Schlitten
- 10: Schienen
- 11: Anschlag
- 12: Beschleunigungssensor
- 13: Bremseinrichtung
- 14: Servoventil
- 15: Hydraulikaggregat
- 16: Bremsdrucksensor
- I: Längsachse von 7
- II: Beschleunigungsrichtung
- V: Druckluftvolumen

## Patentansprüche

1. Verfahren zur Durchführung von Crash-Schlitten-Versuchen, insbesondere zur Simulierung des Aufpralls eines Kraftfahrzeugs auf ein Hindernis, bei welchem die Verzögerungskräfte eines realen Aufpralls simuliert werden, indem ein Crash-Schlitten (9)entsprechend der realen Verzögerungskurve beschleunigt wird,
**dadurch gekennzeichnet,**
**daß** während des Versuches auf den Crash-Schlitten (9) einerseits eine Kraft in Beschleunigungsrichtung (II) ausgeübt wird, die größer ist als die zur Beschleunigung entsprechend der realen Verzögerungskurve jeweils nötige Kraft, und daß zur Erzielung der gewünschten Beschleunigungskurve auf den Crash-Schlitten (9) oder auf eine diesen antreibende Vorrichtung (7) andererseits eine der Beschleunigungsrichtung (II) entgegengerichtete Bremskraft ausgeübt wird, die so groß ist, daß die resultierende Kraft den Schlitten (9) entsprechend der gewünschten Beschleunigungskurve beschleunigt.

2. Verfahren nach Anspruch 1,
**dadurch gekennzeichnet,**
**daß** die Bremskraft in Abhängigkeit von der realen gemessenen Beschleunigung des Crash-Schlittens geregelt wird.

3. Verfahren nach Anspruch 1 oder 2,
**dadurch gekennzeichnet,**
**daß** die in Beschleunigungsrichtung (II) wirkende Kraft pneumatisch erzeugt wird.

4. Verfahren nach Anspruch 3,
**dadurch gekennzeichnet,**
**daß** bei maximaler Bremskraft in einer Druckkammer (2) ein Druck erzeugt wird, der mindestens der maximal notwendigen Beschleunigungskraft entspricht, und daß anschließend die Bremskraft entsprechend der Beschleunigungskurve graduell reduziert wird.

5. Verfahren nach Anspruch 4,
**dadurch gekennzeichnet,**
**daß** die Erzeugung des notwendigen Druckes über einen an die Druckkammer (2) angeschlossenen Drucksensor (4) gesteuert wird, insbesondere unter Verwendung eines Computers.

6. Verfahren nach Anspruch 4 oder 5,
**dadurch gekennzeichnet,**
**daß** der Druck in der Druckkammer (2) am Ende des Crash-Versuches auf Umgebungsdruck abgesenkt wird.

7. Verfahren nach einem der vorhergehenden Ansprüche,
**dadurch gekennzeichnet,**
**daß** die Bremskraft hydraulisch auf den Bremsschlitten (9) oder eine diesen antreibende Vorrichtung (7) übertragen wird.

8. Verfahren nach einem der vorhergehenden Ansprüche,
**dadurch gekennzeichnet,**
**daß** am Ende des Crash-Versuches eine Vollbremsung einer den Crash-Schlitten (9) antreibenden und an diesem lose angreifenden Vorrichtung (7) ausgeführt wird.

9. Verfahren nach Anspruch 8,
**dadurch gekennzeichnet,**
**daß** das Ende über den zurückgelegten Weg des Crash-Schlittens (9), die Zeit und/oder die Geschwindigkeit des Crash-Schlittens (9) bestimmt wird.

10. Vorrichtung zur Durchführung des Verfahrens nach Anspruch 1 mit einer Druckkammer (2), deren Volumen (V) durch einen Kolben (8) begrenzt wird, der über eine Schubstange (7) auf den Crash-Schlitten (9) wirkt, einem Kompressor (1) zur Erzeugung des notwendigen Druckes in der Druckkammer (2) und einer auf den Crash-Schlitten (9) oder die Schubstange (7) wirkenden Bremseinrichtung (13).

11. Vorrichtung nach Anspruch 10,
**dadurch gekennzeichnet,**
**daß** die Druckkammer (2) ein Sicherheitsventil (3) zur Begrenzung des Maximaldruckes aufweist.

12. Vorrichtung nach Anspruch 10 oder 11,
**dadurch gekennzeichnet,**
**daß** an die Druckkammer (2) ein Drucksensor (4) angeschlossen ist, dessen Ausgangssignal an eine Steuereinrichtung zur Steuerung der Druckerzeugung übertragen wird.

13. Vorrichtung nach einem der Ansprüche 10 bis 12,
**dadurch gekennzeichnet,**
**daß** an die Druckkammer (2) ein Druckschalter (5) angeschlossen ist, dessen Ansprechdruck etwas unterhalb des Ansprechdruckes des Sicherheitsventils (3) liegt, und durch den der Kompressor (1) abgeschaltet wird.

14. Vorrichtung nach einem der Ansprüche 10 bis 13,
**dadurch gekennzeichnet,**
**daß** die auf den Crash-Schlitten (9) oder die Schubstange (7) wirkende Bremseinrichtung (13) hydraulisch betätigbar ist.

15. Vorrichtung nach Anspruch 14,
**dadurch gekennzeichnet,**
**daß** die Bremskraft über ein Hydraulikventil (14) regelbar ist.

16. Vorrichtung nach Anspruch 15,
**dadurch gekennzeichnet,**
**daß** die Bremskraft in Abhängigkeit von der Beschleunigung des Crash-Schlittens (9) regelbar ist.

17. Vorrichtung nach Anspruch 14 oder 15,
**dadurch gekennzeichnet,**
**daß** die Bremskraft in Abhängigkeit vom Soll-Druck der Bremseinrichtung (13) regelbar ist.

18. Vorrichtung nach Anspruch 17,
**dadurch gekennzeichnet,**
**daß** der Crash-Schlitten (9) mittels einer lose am Crash-Schlitten (9) angreifenden Schubstange (7) verschiebbar ist.

19. Vorrichtung nach Anspruch 18,
**dadurch gekennzeichnet,**
**daß** die Bremseinrichtung (13) auf die Schubstange (7) wirkt.

20. Vorrichtung nach einem der Ansprüche 10 bis 19,
**dadurch gekennzeichnet,**
**daß** mehrere Einheiten bestehend aus Kompressor (1) und Druckkammer (2) zur Erzeugung der Beschleunigungskraft vorgesehen sind.

## Claims

1. A method of carrying out crash-carriage tests, in particular for the simulation of the impact of a motor vehicle onto an obstacle, wherein the deceleration forces of a real impact are simulated in that a crash carriage (9) is accelerated in accordance with the real deceleration curve,
**characterised in that**, on the one hand,
a force is exerted onto the crash carriage (9) during the test in the direction of acceleration (II) which is larger than the respective required force for the acceleration corresponding to the real deceleration curve; and **in that**, on the other hand, for the achieving of the desired acceleration curve, a braking force directed against the direction of acceleration (II) is exerted onto the crash carriage (9) or onto an apparatus (7) driving it which is so large that the resulting force accelerates the carriage (9) in accordance with the desired acceleration curve.

2. A method in accordance with claim 1, **characterised in that** the braking force is regulated in dependence on the real measured acceleration of the crash carriage.

3. A method in accordance with claim 1 or claim 2, **characterised in that** the force acting in the direction of acceleration (II) is generated pneumatically.

4. A method in accordance with claim 3, **characterised in that** a pressure is generated in a pressure chamber (2) at a maximum braking force which at least corresponds to the maximum required acceleration force; and **in that** the braking force is subsequently gradually reduced in accordance with the acceleration curve.

5. A method in accordance with claim 4, **characterised in that** the generation of the required pressure is controlled via a pressure sensor (4) connected to the pressure chamber (2), in particular while using a computer.

6. A method in accordance with claim 4 or claim 5, **characterised in that** the pressure in the pressure chamber (2) is lowered to ambient pressure at the end of the crash test.

7. A method in accordance with any one of the preceding claims, **characterised in that** the braking force is transmitted hydraulically to the braking carriage (9) or to an apparatus (7) driving it.

8. A method in accordance with any one of the preceding claims, **characterised in that** a full braking of an apparatus (7) driving the crash carriage (9) and loosely engaging at it is carried out at the end of the crash test.

9. A method in accordance with claim 8, **characterised in that** the end is determined via the path covered by the crash carriage (9), via the time and/or via the speed of the crash carriage (9).

10. An apparatus for the carrying out of the method in accordance with claim 1 comprising a pressure chamber (2) whose volume (V) is restricted by a piston (8) which acts on the crash carriage (9) via a connecting rod (7), a compressor (1) for the generation of the required pressure in the pressure chamber (2) and a braking device (13) acting on the crash carriage (9) or on the connecting rod (7).

11. An apparatus in accordance with claim 10, **characterised in that** the pressure chamber (2) has a safety valve (3) to limit the maximum pressure.

12. An apparatus in accordance with claim 10 or claim 11, **characterised in that** a pressure sensor (4) is connected to the pressure chamber and its output signal is transmitted to a control device for the control of the pressure generation.

13. An apparatus in accordance with any one of the claims 10 to 12, **characterised in that** a pressure switch (5) is connected to the pressure chamber (2) and its response pressure lies somewhat below the response pressure of the safety valve (3) and the compressor (1) is switched off by it.

14. An apparatus in accordance with any one of the claims 10 to 13, **characterised in that** the braking device (13) acting on the crash carriage (9) or on the connecting rod (7) is hydraulically actuable.

15. An apparatus in accordance with claim 14, **characterised in that** the braking force can be regulated via a hydraulic valve (14).

16. An apparatus in accordance with claim 15, **characterised in that** the braking force can be regulated in dependence on the acceleration of the crash carriage (9).

17. An apparatus in accordance with claim 14 or claim 15, **characterised in that** the braking force can be regulated in dependence on the desired pressure of the braking device (13).

18. An apparatus in accordance with claim 17, **characterised in that** the crash carriage (9) can be displaced by means of a connecting rod (7) loosely engaging at the crash carriage (9).

19. An apparatus in accordance with claim 18, **characterised in that** the braking device (13) acts on the connecting rod (7).

20. An apparatus in accordance with any one of the claims 10 to 19, **characterised in that** a plurality of units (1, 2), comprising the compressor (1) and the pressure chamber (2), are provided for the generation of the acceleration force.

## Revendications

1. Procédé pour exécuter des essais à chariot de collision, en particulier pour simuler l'impact d'un véhicule automobile sur un obstacle, dans lequel on simule les forces de décélération d'un impact réel du fait qu'un chariot de collision (9) est accélérée en correspondance de la courbe de décélération réelle,
**caractérisé en ce que**
pendant l'essai sur le chariot de collision (9), on exerce d'une part une force dans la direction d'accélération (II) qui est supérieure à la force respective nécessaire à l'accélération en correspondance de la courbe de décélération réelle, et **en ce que** pour obtenir la courbe d'accélération désirée sur le chariot de collision (9) ou sur un dispositif (7) entraînant celui-ci, on exerce d'autre part une force de freinage opposée à la direction d'accélération (II) qui est aussi importante que la force résultante accélère le chariot (9) en correspondance de la courbe d'accélération désirée.

2. Procédé selon la revendication 1,
**caractérisé en ce que**
on régule la force de freinage en fonction de l'accélération réelle mesurée du chariot de collision.

3. Procédé selon la revendication 1 ou 2,
**caractérisé en ce que**
la force agissant en direction d'accélération (II) est générée par voie pneumatique.

4. Procédé selon la revendication 3,
**caractérisé en ce que**
lors d'une force de freinage maximale, on génère dans une chambre à pression (2) une pression qui correspond au moins à la force d'accélération maximale nécessaire, et ensuite on réduit graduellement la force de freinage en correspondance de la courbe d'accélération.

5. Procédé selon la revendication 4,
**caractérisé en ce que**
la génération de la pression nécessaire est commandée via un capteur de pression (4) branché à la chambre à pression (2), en particulier en utilisant un ordinateur.

6. Procédé selon la revendication 4 ou 5,
**caractérisé en ce que**
la pression dans la chambre à pression (2) est baissée à la pression ambiante à la fin de l'essai de collision.

7. Procédé selon l'une des revendications précédentes,
**caractérisé en ce que**
la force de freinage est transmise par voie hydraulique au chariot de freinage (9) ou à un dispositif (7) qui entraîne ce dernier.

8. Procédé selon l'une des revendications précédentes,
**caractérisé en ce que**
à la fin de l'essai de collision, on effectue un freinage à fond d'un dispositif (7) qui entraîne le chariot de collision (9) et qui attaque celui-ci de façon lâche.

9. Procédé selon la revendication 8,
**caractérisé en ce que**
l'on détermine la fin de l'essai par la course parcourue du chariot de collision (9), par le temps et/ou par la vitesse du chariot de collision (9).

10. Dispositif pour mettre en oeuvre le procédé selon la revendication 1, comprenant une chambre à pression (2) dont le volume (V) est limité par un piston (8) qui agit sur le chariot de collision (9) via une barre de poussée (7), un compresseur (1) pour générer la pression nécessaire dans la chambre à pression (2), et un dispositif de freinage (13) agissant sur le chariot de collision (9) ou sur la barre de poussée (7).

11. Dispositif selon la revendication 10,
**caractérisé en ce que**
la chambre à pression (2) présente une valve de sécurité (3) pour limiter la pression maximale.

12. Dispositif selon la revendication 10 ou 11,
**caractérisé en ce que**
un capteur de pression (4) est branché à la chambre à pression (2), dont le signal de sortie est transmis à un dispositif de commande destiné à commander la génération de pression.

13. Dispositif selon l'une des revendications 10 à 12,
**caractérisé en ce que**
un interrupteur manométrique (5) est branché à la chambre à pression (2), dont la pression de réponse est légèrement inférieure à la pression de réponse de la valve de sécurité (3) et par lequel est coupé le compresseur (1).

14. Dispositif selon l'une des revendications 10 à 13,
**caractérisé en ce que**
le dispositif de freinage (13) agissant sur le chariot de collision (9) ou sur la barre de poussée (7) est actionnable par voie hydraulique.

15. Dispositif selon la revendication 14,
**caractérisé en ce que**
la force de freinage est réglable via une valve hydraulique (14).

16. Dispositif selon la revendication 15,
**caractérisé en ce que**
la force de freinage est réglable en fonction de l'accélération du chariot de collision (9).

17. Dispositif selon la revendication 14 ou 15,
**caractérisé en ce que**
la force de freinage est réglable en fonction de la pression de consigne du dispositif de freinage (13).

18. Dispositif selon 1a revendication 17,
**caractérisé en ce que**
le chariot de collision (9) est mobile en translation au moyen d'une barre de poussée (7) attaquant de façon lâche le chariot de collision (9).

19. Dispositif selon la revendication 18,
**caractérisé en ce que**
le dispositif de freinage (13) agit sur la barre de poussée (7).

20. Dispositif selon l'une des revendications 10 à 19,
**caractérisé en ce que**
il est prévu plusieurs unités constituées par un compresseur (1) et par une chambre à pression (2) pour générer la force d'accélération.
